(19) Europäisches Patentamt
European Patent Office
Office européen des brevets

(11) Veröffentlichungsnummer: **0 015 440**
**A1**

(12) # EUROPÄISCHE PATENTANMELDUNG

(21) Anmeldenummer: **80100831.9**

(22) Anmeldetag: **20.02.80**

(51) Int. Cl.³: **C 07 C 123/00,** C 07 C 149/42, A 01 N 37/52

(30) Priorität: **23.02.79 DE 2907090**
**10.11.79 DE 2945460**

(43) Veröffentlichungstag der Anmeldung: **17.09.80**
**Patentblatt 80/19**

(84) Benannte Vertragsstaaten: **BE CH DE FR GB IT**

(71) Anmelder: **HOECHST AKTIENGESELLSCHAFT, Zentrale Patentabteilung Postfach 80 03 20, D-6230 Frankfurt/Main 80 (DE)**

(72) Erfinder: **Sinharay, Akhileswar, Dr., Landgraf-Philipp-Strasse 28, D-6000 Frankfurt am Main 50 (DE)**
Erfinder: **Stähler, Gerhard, Dr., Loreleistrasse 87, D-6230 Frankfurt am Main 80 (DE)**
Erfinder: **Bonin, Werner, Dr., Im Schulzehnten 18, D-6233 Kelkheim (Taunus) (DE)**

(54) **Substituierte N1-Vinyl-N1-methyl-N2-aryl-formamidine, Verfahren zu ihrer Herstellung sowie ihre Verwendung als Schädlingsbekämpfungsmittel.**

(57) Verbindungen der Formel

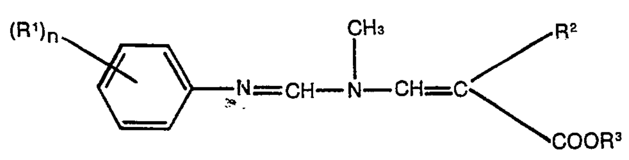

worin $R^1$ Halogen, Alkyl, Alkoxy, Alkylthio, $CF_3$, $NO_2$, CN, Phenoxy, Halogenphenoxy, Phenylthio oder Halogenphenylthio, $R^2$ CN oder $COOR^3$, $R^3$ Alkyl, Alkoxyalkyl oder Cycloalkyl und n 0–3 bedeuten, sind wirksame Insektizide und Akarizide, insbesondere Ektoparasitizide.

EP 0 015 440 A1

0015440

HOECHST AKTIENGESELLSCHAFT
HOE 79/F 040 K

Dr. TG/Fr

# Substituierte $N^1$-Vinyl-$N^1$-methyl-$N^2$-aryl-formamidine, Verfahren zu ihrer Herstellung sowie ihre Verwendung als Schädlingsbekämpfungsmittel

Gegenstand der Erfindung sind substituierte $N^1$-Vinyl-$N^1$-methyl-$N^2$-aryl-formamidine der allgemeinen Formel I,

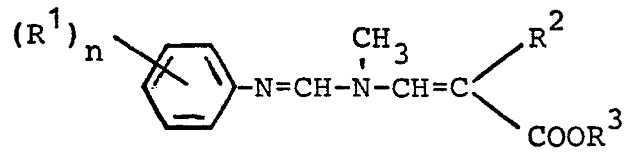

(I)

worin n 0 oder ein Zahl von 1 bis 3,

$R^1$ Halogen, $(C_1-C_4)$-Alkyl, $(C_1-C_4)$-Alkoxy, $(C_1-C_4)$-Alkylthio, Trifluormethyl, Nitro, Cyano, Phenoxy, Halogenphenoxy, Phenylthio oder Halogenphenylthio, wobei für n = 2 oder 3 die Reste $R^1$ gleich oder verschieden sein können,

$R^2$ die Gruppen -CN oder $-COOR^3$ und

$R^3$ $(C_1-C_8)$-Alkyl, $(C_1-C_8)$-Alkoxyalkyl oder $(C_3-C_6)$-Cycloalkyl bedeuten.

Gegenstand der Erfindung ist weiter ein Verfahren zur Herstellung der Verbindungen der Formel I, das dadurch gekennzeichnet ist, daß man $N^1$-Methyl-$N^2$-aryl-formamidine der allgemeinen Formel II,

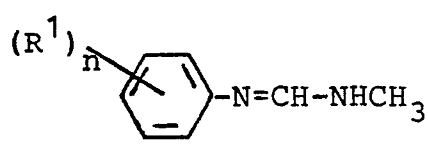

(II)

mit Cyanessigsäure- oder -Malonsäureestern der allgemeinen Formel III,

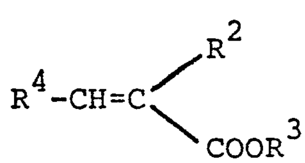

(III)

worin $R^4$ Hydroxy, niederes Alkoxy oder Halogen, vorzugsweise Chlor bedeutet, umsetzt.

$N^1$-Methyl-$N^2$-aryl-formamidine der Formel II sind entweder bekannt oder können nach bekannten Methoden hergestellt werden (vgl. z.B. US-PS 3 729 565).

Cyanessigsäure- und -Malonsäureester der Formel III sind gleichfalls bekannt bzw. können nach bekannten Methoden hergestellt werden (vgl. z.B. Bull.soc.chim. France, 25, 18 und 36 (1901), Annalen 297, 75 (1897) bzw. Chem. Berichte 103, 1982 (1970).

Zur Herstellung der erfindungsgemäßen Verbindungen der Formel I werden die Reaktionskomponenten vorzugsweise in stöchiometrischen Mengen eingesetzt. Überschüsse an einer der Komponenten, z.B. bis zu 10 % sind möglich, bringen aber im allgemeinen keine Vorteile. Es ist vorteilhaft, die Umsetzung in Gegenwart eines Lösungs- oder Verdünnungsmittels vorzunehmen. Hierfür kommen inerte polare oder unpolare Lösungsmittel in Frage, z.B. Alkohole, beispielsweise Methanol, Äthanol, Propanol, Isopropanol, Methoxyäthanol; Ketone, z.B. Aceton, Methyläthylketon; Äther, z.B. Diäthyläther, Diisopropyläther, Dibutyläther, Tetrahydrofuran, Dioxan, Dimethoxyäthan; ferner z.B. Acetonitril, Benzol, Toluol, Xylol, Chlorbenzol, Methylenchlorid, Chloroform, Essigester, Cyclohexan, Dimethylformamid, Dimethylacetamid oder Dimethylsulfoxid.

Die Reaktionstemperaturen sind nicht kritisch und können in weiten Grenzen, beispielsweise zwischen -10 und +150°C variieren, vorzugsweise liegt sie zwischen 20°C und 120°C. Im Fall der Alkoxymethylen-cyanessigsäureester wird bevorzugt bei Raumtemperatur gearbeitet.

Die Reaktionszeiten betragen, je nach Temperaturbereich, einige Minuten bis wenige Stunden.

Die Isolierung der in den meisten Lösungsmitteln schwerlöslichen Verfahrenserzeugnisse erfolgt nach üblichen Methoden, z.B. durch Absaugen, gegebenenfalls durch Abdestillieren der verwendeten Lösungsmittel oder Verdünnen der Reaktionslösung mit Wasser. Gegebenenfalls kann eine Reinigung durch Umkristallisieren aus einem geeigneten Lösungsmittel oder Lösungsmittelgemisch erfolgen.

Die Verbindungen der allgemeinen Formel I stellen eine neue Stoffklasse dar, die bisher in der Literatur nicht beschrieben worden ist. Sie besitzen wertvolle pestizide, vorzugsweise insektizide und akarizide, insbesondere ektoparasitizide Eigenschaften. Sie eignen sich daher vor allem zur Bekämpfung von Milben (Akarina), vorzugsweise von parasitären Zecken (Ixodidae). Das gilt für alle Stadien ein- und mehrwirtiger Zeckenarten, und zwar sowohl für normal empfindliche als auch solche Stämme, die gegenüber Verbindungen wie Phosphorsäureestern, Carbamaten und anderen bereits bekannten Zeckenbekämpfungsmitteln resistent sind. Die Wirkung gegen Zecken äußert sich in einer starken Hemmung der Fertilität sowie in einem intensiven "Detaching"-Effekt, was von besonderer Bedeutung für die Behandlung von bereits durch Zecken befallenen Wirtstieren (z.B. Rindern) ist. Der Detaching-Effekt setzt unmittelbar nach Applikation der Wirksubstanz ein, wodurch die Zecken daran gehindert werden, ihe Nahrungsaufnahme, nämlich die Blutentnahme aus dem Wirt, fortzusetzen. Sie fallen im Laufe der Behandlung von dem Wirtstier ab, das auf diese Weise vollständig von den Schädlingen befreit wird.

Zu den Zecken, die mittels der erfindungsgemäßen Verbindungen erfolgreich bekämpft werden können, zählen beispielsweise Arten der Gattungen Amblyomma, Aponomma, Boophilus, Dermacentor, Haemaphysalis, Hyalomma, Ixodes und Rhipicephalus.

Gegenstand der Erfindung sind daher auch insektizide und akarizide, insbesondere ektoparasitizide Mittel, die gekennzeichnet sind durch einen Gehalt an einer Verbindung der Formel I. Diese Mittel liegen vorzugsweise als emulgierbare Konzentrate, die außer dem Wirkstoff bzw. Wirkstoffgemisch noch übliche Formulierungshilfsmittel bzw. Zusätze, wie z.B. Lösungsmittel, Emulgatoren, Netz- bzw. Dispergiermittel enthalten, oder als Spritzpulver vor, die außer dem Wirkstoff noch übliche Formulierungshilfsmittel bzw. Zusätze, wie z.B. Netz- und Dispergiermittel, Inertstoffe, Mahlhilfsmittel sowie ggf. Penetrationshilfsmittel enthalten. Der Wirkstoffgehalt in den erfindungsgemäßen Mitteln beträgt vorzugsweise 2 bis 95 Gew.-%, insbesondere 10 bis 60 Gew.-%. Die Mittel gelangen bevorzugt in Form von wässrigen Verdünnungen zur Anwendung, mit denen die von den Schädlingen befallenen Tiere bzw. Pflanzen im Tupf-, Sprüh- oder Tauchverfahren unter Verwendung von geeigneten üblichen Sprühgeräten oder Vorrichtungen bzw. in geeigneten Anlagen behandelt werden. Der Wirkstoffgehalt in den zur Anwendung gelangenden Verdünnungen beträgt vorzugsweise 1 ppm bis 5 Gew.-%, insbesondere 10 ppm bis 0,5 Gew.-%.

Die Erfindung wird durch die nachfolgenden Beispiele erläutert:

## A. Chemische Beispiele

Beispiel 1:
$N^1$-(2-Äthoxycarbonyl-2-cyano-vinyl)-$N^1$-methyl-$N^2$-(2,4-dimethylphenyl)-formamidin

48,6 g $N^1$-Methyl-$N^2$-(2,4-dimethylphenyl)-formamidin werden in 100 ml Äther gelöst und eine Lösung von 51 g Äthoxymethylen-cyanessigsäureäthylester in 100 ml Äther unter Rühren bei ca. 20°C dazugegeben. Nach 5 Stunden wird das ausgefallene Produkt abgesaugt. Das Produkt ist sehr rein. Es kann gegebenenfalls aus Chloroform/Petroläther (40 - 80°C) umkristallisiert werden. Ausb. 68 g, Fp. 140 - 142°C.

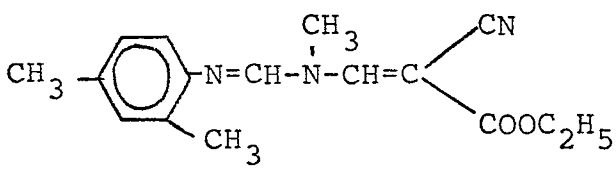

Beispiel 2:
$N^1$-(2,2-Bis-äthoxycarbonyl-vinyl)-$N^2$-(2,4-dimethylphenyl)-$N^1$-methyl-formamidin

8,1 g $N^1$-Methyl-$N^2$-(2,4-dimethylphenyl)-formamidin, 12,9 g Äthoxymethylenmalonsäure-diäthylester und 50 ml Toluol werden 3 Stunden unter Rückfluß erhitzt, danach wird das Lösungsmittel im Vakuum entfernt und der Rückstand aus Cyclohexan umkristallisiert. Ausb.: 3,1 g; Schmp. 115 - 116°C.

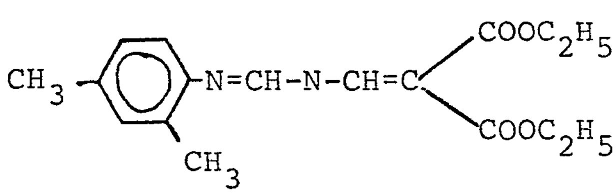

In analoger Weise erhält man unter Verwendung der entsprechenden Ausgangsstoffe die in der nachstehenden Tabellen 1 und 2 zusammengefaßten Verbindungen der Formel I:

<u>Tabelle 1</u>
$R^2$ = CN

| Beispiel Nr. | $(R^1)_n$ | $R^3$ | Fp.(°C) |
|---|---|---|---|
| 3 | 2,6-$(CH_3)_2$ | $-C_2H_5$ | 140 - 141 |
| 4 | 3-Cl | " | 112 - 113 |
| 5 | 2,6-$(C_2H_5)_2$ | " | 100 |
| 6 | 2- $CH_3$, 4-Cl | " | 133 - 134 |
| 7 | 4-Cl | " | 140 - 141 |
| 8 | 2,4,6-$(CH_3)_3$ | " | 142 - 143 |
| 9 | 2,5-$(CH_3)_2$ | " | 130 - 131 |
| 10 | 2,3-$(CH_3)_2$ | " | 133 - 134 |
| 11 | 2-$CH_3$ | " | 120 - 121 |
| 12 | H | " | 115 |
| 13 | 2-$CF_3$, 4-Cl | " | 168 |
| 14 | 4-CN | " | 166 - 167 |
| 15 | 4-$NO_2$ | " | 157 - 158 |
| 16 | 4-$SCH_3$ | " | 128 - 129 |
| 17 | 4-$SC_6H_5$ | " | |
| 18 | 4- 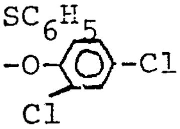 | " | |
| 19 | 3-Cl, 4- 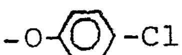 | " | |
| 20 | 3-Cl, 6- 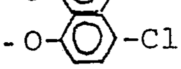 | " | |
| 21 | 3-Cl, 4-F | " | 141 |
| 22 | 2-$CH(CH_3)_2$, 5-Cl | " | |
| 23 | 2-$CH(CH_3)_2$, 4-Cl | " | |
| 24 | 2-Cl, 3-$CF_3$, 4-F | " | |
| 25 | 2,4-$Cl_2$ | " | |
| 26 | 2,3-$Cl_2$ | " | |
| 27 | 2,6-$Cl_2$ | " | |
| 28 | 2-Cl, 4-$CH_3$ | " | |
| 29 | 2-$OCH_3$ , 4-$CH_3$ | " | |
| 30 | 2-$CH_3$, 4-$OCH_3$ | " | |
| 31 | 2,4-$(OCH_3)_2$ | " | |
| 32 | 4-$OC_6H_5$ | " | 112 - 113 |

Tabelle 1 (Fortsetzung)

| Beispiel Nr. | $(R^1)_n$ | $R^3$ | Fp.(°C) |
|---|---|---|---|
| 33 | $2,4-(CH_3)_2$ | $-CH_3$ | 149 |
| 34 | $2,3-(CH_3)_2$ | " | |
| 35 | $2-CH_3$ | " | |
| 36 | $2,6-(C_2H_5)_2$ | " | |
| 37 | $2-CH_3$, 4-Cl | " | |
| 38 | $2,6-[CH(CH_3)_2]_2$ | $-C_2H_5$ | 146 - 148 |
| 39 | $2,4-(CH_3)_2$ | $-C_3H_7$ (i) | 120 - 121 |
| 40 | $2,4-(CH_3)_2$ | $-C_4H_9$ (n) | 107 - 108 |
| 41 | $2,4-(CH_3)_2$ | $-C_5H_{11}$ (n) | 79 - 81 |
| 42 | $2,4-(CH_3)_2$ | $-C_2H_4OCH_3$ | 122 - 124 |
| 43 | $2,4-(CH_3)_2$ | 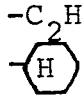 | 130 - 131 |
| 44 | $2,4-(CH_3)_2$ | $-C_4H_9$ (i) | 114 - 115 |
| 45 | $2,4-(CH_3)_2$ | $-C_4H_9$ (tert.) | |
| 46 | $2,4-(CH_3)_2$ | $-C_8H_{17}$ (n) | 75 - 76 |
| 47 | $2,4-(CH_3)_2$ | 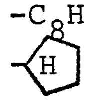 | 120 - 121 |

Tabelle 2
$R^2 = COOR^3$

| Beispiel Nr. | $(R^1)_n$ | $R^2$ | Schmp.(°C) |
|---|---|---|---|
| 48 | $2,3-Cl_2$ | $-C_2H_5$ | 124 - 125 |
| 49 | $2,3-(CH_3)_2$ | " | 105 - 106 |
| 50 | $2,6-(CH_3)_2$ | " | 90 - 91 |
| 51 | 4-Cl | " | 109 - 110 |
| 52 | $2,4,6-(CH_3)_3$ | " | 98 - 99 |
| 53 | H | " | 110 - 111 |
| 54 | $4-NO_2$ | " | 144 - 145 |
| 55 | 4-Cl, $2-CF_3$ | " | 105 - 106 |
| 56 | 4-Cl, $2-CH_3$ | " | 112 - 114 |
| 57 | 3-Cl, 4-F | " | 100 - 102 |

Tabelle 2 (Fortsetzung)

| Beispiel Nr. | $(R^1)_n$ | $R^3$ | Schmp. (°C) |
|---|---|---|---|
| 58 | $2-CH_3$ | $-C_2H_5$ | 96 - 97 |
| 59 | $2,6-(-CH-CH_3)_2$<br>$CH_3$ | " | 158 - 159 |
| 60 | $2,4-Cl_2$ | " | 87 - 88 |
| 61 | $2-CH_3$, 3-Cl | " | 111 - 112 |
| 62 | 3-Cl | " | |
| 63 | $2,5-(CH_3)_2$ | " | |
| 64 | 4-CN | " | |
| 65 | $4-SCH_3$ | " | |
| 66 | 4-Br | " | |
| 67 | $2,4-Br_2$ | " | |
| 68 | 3-Cl, 4-O- 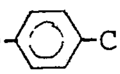 -Cl | " | |
| 69 | 2-Cl, $6-OC_6H_5$ | " | |
| 70 | $2-CH(CH_3)_2$, 5-Cl | " | |
| 71 | $2-CH(CH_3)_2$, 4-Cl | " | |
| 72 | 2-Cl, $3-CF_3$, 4-F | " | |
| 73 | $2,6-Cl_2$ | " | |
| 74 | 2-Cl, $4-CH_3$ | " | |
| 75 | $2-OCH_3$, $4-CH_3$ | " | |
| 76 | $2-CH_3$, $4-OCH_3$ | " | |
| 77 | $2,4-(OCH_3)_2$ | " | |
| 78 | $4-OC_6H_5$ | " | |
| 79 | $2,4-(CH_3)_2$ | $-CH_3$ | |
| 80 | $2,3-(CH_3)_2$ | " | |
| 81 | $2-CH_3$ | " | |
| 82 | $2,6-(C_2H_5)_2$ | " | |
| 83 | $2-CH_3$, 4-Cl | " | |
| 84 | $2,4-(CH_3)_2$ | $-C_3H_7$ (i) | |
| 85 | $2,4-(CH_3)_2$ | $-C_4H_9$ (n) | |
| 86 | $2,4-(CH_3)_2$ | $-C_5H_{11}$ (n) | |
| 87 | $2,4-(CH_3)_2$ | $-C_2H_4OCH_3$ | |
| 88 | $2,4-(CH_3)_2$ | Cyclohexyl | |
| 89 | $2,4-(CH_3)_2$ | Cyclopentyl | |

Tabelle 2 (Fortsetzung)

| Beispiel Nr. | $(R^1)_n$ | $R^3$ | Schmp. (°C) |
|---|---|---|---|
| 90 | 2,4-$(CH_3)_2$ | $-C_8H_{17}$ (n) | |
| 91 | 4-$SC_6H_5$ | $-C_2H_5$ | |
| 92 | 4-O-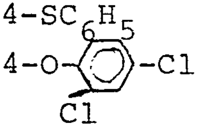 | $-C_2H_5$ | |

B. Formulierungsbeispiel

Ein emulgierbares Konzentrat wird erhalten, indem man 10 g eines Wirkstoffs der Formel I bei Raumtemperatur in 100 ml eines Gemisches bestehend aus 85 Gewichtsteilen Dimethylformamid, 3 Gewichtsteilen Nonylphenolpolyglykoläther und 7 Gewichtsteilen oxäthyliertem Rizinusöl löst. Das Konzentrat läßt sich durch Einrühren in Wasser leicht emulgieren.

C. Biologische Beispiele

Die biologische Wirksamkeit der erfindungsgemäßen Verbindungen der Formel I wird durch die nachstehend aufgeführten Beispiele I und II verdeutlicht. Als Vergleichsprodukte dienten dabei:

Präparat A: Chlormethiuron
[$N^1$-Dimethyl-$N^2$-(4-chlor-2-methyl-phenyl)-thioharnstoff] (DOS 23 37 122)

Präparat B: Clenpyrin
[1-n-Butyl-2-(3,4-dichlor-phenylimino)-pyrrolidin] (Enders et al., Pestic.Sci. 4, 823-838 (1973))

Beispiel I:

Prüfung an Zecken: Hemmung der Reproduktion

Die in der nachstehenden Tabelle I aufgeführten Prüfsubstanzen werden gemäß dem Formulierungsbeispiel formuliert und die erhaltenen emulgierbaren Konzentrate mit Wasser auf die Konzentration von 1000 ppm Wirkstoff verdünnt.

Jeweils 10 vollgesogene Zeckenweibchen der tropischen Rinderzecke Boophilus microplus werden 5 Minuten lang in die Wirkstoffemulsionen eingetaucht. Die Zecken werden dann auf Filtrierpapier getrocknet, mit der Dorsalseite auf eine Klebefolie geklebt und anschließend zur Eiablage im Wärmeschrank bei 28°C und hoher Luftfeuchtigkeit (80% rel. Feuchte) aufbewahrt.

Zur Bewertung der Wirksamkeit der Wirkstoffzubereitungen werden

a) die Hemmung der Eiablage,
b) die Größe der Eigelege und
c) die Schlupfrate der Larven

ermittelt.

Aus den Teilschädigungen a), b) und c) wird die Gesamtschädigung, ausgedrückt als Hemmung der Reproduktionskapazität (bzw. Fertilität) ermittelt. Demzufolge besagen 100 % Hemmung der Reproduktionskapazität, daß die Zecken keine und 0 %, daß sie eine normale Nachkommenschaft entsprechend derjenigen unbehandelter Kontrollen haben.

Die Versuchsergebnisse sind in der Tabelle I zusammengefaßt. Es geht daraus hervor, daß die erfindungsgemäßen Wirkstoffe dem Vergleichspräparat deutlich überlegen sind.

Tabelle I

| Verbindung (Beispiel) | Hemmung der Reproduktions-kapazität (%) | Verbindung (Beispiel) | Hemmung der Reproduktions-kapazität (%) |
|---|---|---|---|
| 1 | 100 | 40 | 100 |
| 11 | 100 | 41 | 100 |
| 10 | 100 | 42 | 100 |
| 6 | 100 | 2 | 100 |
| 5 | 100 | 49 | 100 |
| 3 | 100 | 50 | 100 |
| 8 | >50 | 52 | 100 |
| 33 | 100 | 56 | 100 |
| | | 51 | 90 |
| | | 58 | 85 |
| | | 61 | 95 |
| Vergleichs-mittel A | <50 | | |

Beispiel II:

Prüfung an Zecken: Detaching Effekt

Mittels Klebeband werden PVC-Stutzen (Ø 4 cm) mit Schraubverschluß an den zuvor enthaarten Flankenseiten von Meerschweinchen angebracht. Die so begrenzten Hautpartien werden mit ungesaugten adulten Zecken der Art Rhipicephalus sanguineus infestiert. Die Zecken werden 72 Stunden nach der Infestation mit wässrigen Emulsionen der erfindungsgemäßen Wirkstoffe und der Vergleichsprodukte A und B, die jeweils 50 ppm des zu prüfenden Wirkstoffs enthalten, vollständig benetzt. 4 Stunden nach der Behandlung wird der Loslaßeffekt (detaching effect) ausgewertet (vgl. Gladney et al., J. Med. Entom. 11, 369 - 372 (1974)).

Die Versuchsergebnisse sind in der Tabelle II zusammengefaßt.

Tabelle II:

| Verbindung (Beispiel) | detaching effect (%) | Verbindung (Beispiel) | detaching effect (%) |
|---|---|---|---|
| 1 | 100 | 39 | 100 |
| 5 | 70 | 40 | 100 |
| 33 | 100 | 41 | 100 |
| A (Vergl.) | 10 | | |
| B (Vergl.) | 40 | | |

Patentansprüche:

1. Substituierte $N^1$-Vinyl-$N^1$-methyl-$N^2$-aryl-formamidine der allgemeinen Formel I,

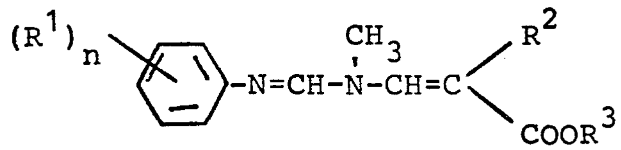

(I)

worin n 0 oder eine Zahl von 1 bis 3,

$R^1$ Halogen, $(C_1-C_4)$-Alkyl, $(C_1-C_4)$-Alkoxy, $(C_1-C_4)$-Alkylthio, Trifluormethyl, Nitro, Cyano, Phenoxy, Halogenphenoxy, Phenylthio oder Halogenphenylthio, wobei für n = 2 oder 3 die Reste $R^1$ gleich oder verschieden sein können, $R^2$ die

$R^2$ die Gruppen -CN oder $COOR^3$ und

$R^3$ $(C_1-C_8)$-Alkyl, $(C_1-C_8)$-Alkoxyalkyl oder $(C_3-C_6)$-Cycloalkyl bedeuten.

2. Verfahren zur Herstellung von Verbindungen der Formel I, dadurch gekennzeichnet, daß man $N^1$-Methyl-$N^2$-aryl-formamidine der allgemeinen Formel II,

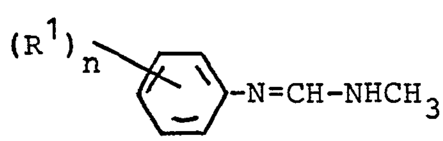

(II)

mit Cyanessigsäure- oder -Malonsäureestern der allgemeinen Formel III,

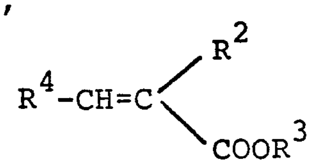

(III)

worin $R^4$ Hydroxy, niederes Alkoxy oder Halogen bedeutet, umsetzt.

3. Schädlingsbekämpfungsmittel, gekennzeichnet durch einen Gehalt an einer Verbindung der Formel I gemäß Anspruch 1

als Wirkstoff.

4. Schädlingsbekämpfungsmittel, gekennzeichnet durch einen Gehalt von 2 bis 95 Gew.-%, vorzugsweise 10 bis 60 Gew.-% an einer Verbindung der Formel I gemäß Anspruch 1 als Wirkstoff sowie üblichen Formulierungshilfsmitteln.

5. Verwendung von Verbindungen der Formel I zur Bekämpfung von Insekten und Akariden.

6. Verbindung der Formel I, worin $(R^1)_n$ Dimethyl bedeutet.

7. Verbindung der Formel

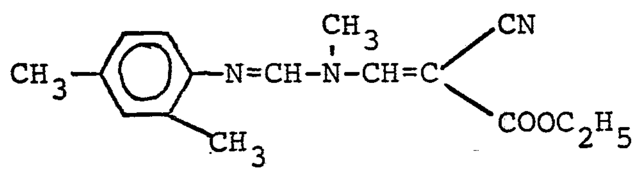

8. Verbindung der Formel

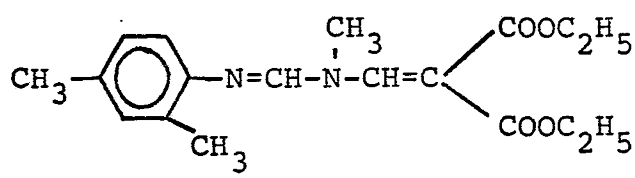

9. Verbindung der Formel

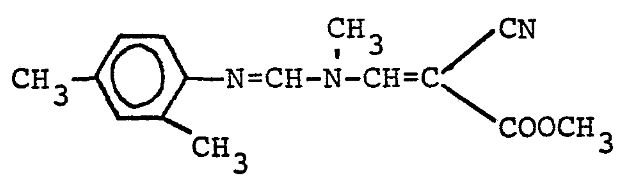

10. Verbindung der Formel

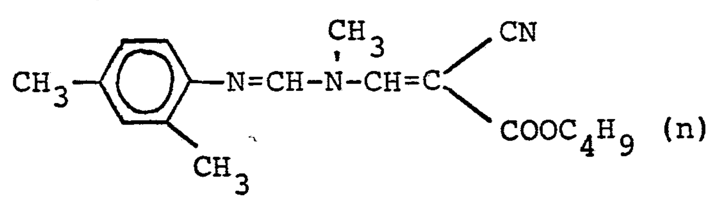

11. Verbindung der Formel

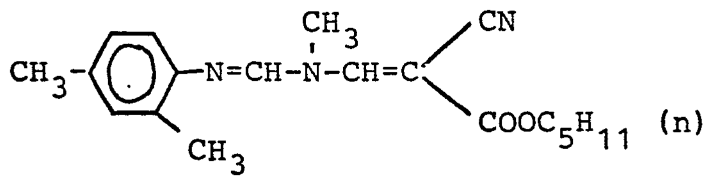

12. Verbindung der Formel

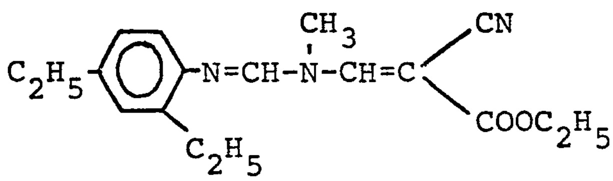

13. Verbindung der Formel

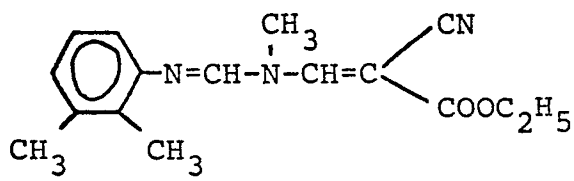

14. Verbindung der Formel

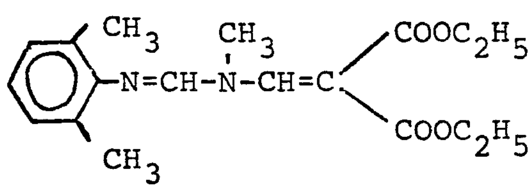

15. Verbindung der Formel

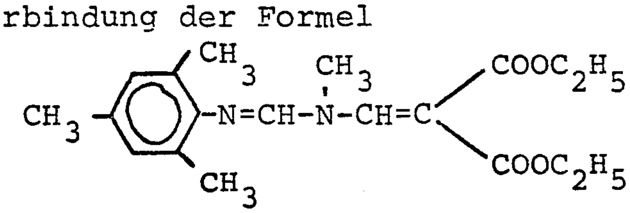

16. Verbindung der Formel

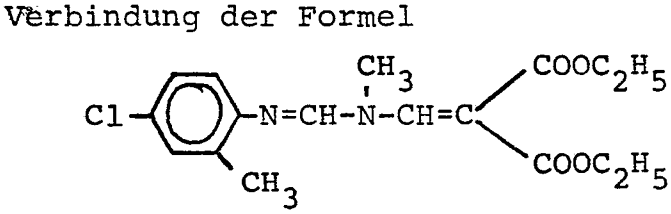

Europäisches Patentamt

# EUROPÄISCHER RECHERCHENBERICHT

0015440

Nummer der Anmeldung

EP 80 10 0831

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| | DE - A - 2 315 041 (CIBA-GEIGY AG)<br>* Ansprüche 1, 10 *<br>-- | 1,3 | C 07 C 123/00<br>C 07 C 149/42<br>A 01 N 37/52 |
| | GB - A - 1 351 070 (BAYER)<br>* Ansprüche 1, 14 *<br>-- | 1,3 | |
| | US - A - 3 880 904 (WRIGHT, JR. et al.)<br>* abstract *<br>---- | 1,3 | |
| | | | RECHERCHIERTE SACHGEBIETE (Int. Cl.3) |
| | | | A 01 N 37/52<br>C 07 C 123/00<br>C 07 C 149/42 |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |
| X | Der vorliegende Recherchenbericht wurde für alle Patentansprüche erstellt. | | |

| Recherchenort | Abschlußdatum der Recherche | Prüfer |
|---|---|---|
| Berlin | 05-06-1980 | STOOS |